# EUROPÄISCHE PATENTSCHRIFT

(11) **EP 3 755 549 B1**
(45) Veröffentlichungstag und Bekanntmachung des Hinweises auf die Patenterteilung: **29.03.2023**
(21) Anmeldenummer: 19709629.0
(22) Anmeldetag: 19.02.2019
(51) Int. Cl.: B60B 33/00

(54) **MEDIZINISCHE BEHANDLUNGSVORRICHTUNG UND FAHRWERK FÜR EINE MEDIZINISCHE BEHANDLUNGSVORRICHTUNG**
MEDICAL TREATMENT APPARATUS AND CHASSIS FOR A MEDICAL TREATMENT APPARATUS
APPAREIL DE TRAITEMENT MÉDICAL ET CHASSIS POUR UN APPAREIL DE TRAITEMENT MÉDICAL

(30) Priorität: 21.02.2018 DE 102018103913
(43) Veröffentlichungstag der Anmeldung: 30.12.2020
(73) Patentinhaber: Fresenius Medical Care Deutschland GmbH, 61352 Bad Homburg (DE)
(72) Erfinder: KEIPER, Alexander, 66903 Frohnhofen (DE)
(74) Vertreter: Bobbert & Partner Patentanwälte PartmbB
(86) Internationale Anmeldenummer: PCT/EP2019/054064
(87) Internationale Veröffentlichungsnummer: WO 2019/162259

(56) Entgegenhaltungen:
- WO-A1-2015/200258
- JP-A- 2006 131 204
- JP-A- 2016 147 031
- US-A- 1 066 754
- US-A1- 2011 140 377
- US-A1- 2015 267 860

## Beschreibung

Die vorliegende Erfindung betrifft ein Fahrwerk für eine medizinische Behandlungsvorrichtung gemäß Anspruch 1. Sie betrifft ferner eine medizinische Behandlungsvorrichtung gemäß Anspruch 8.

Aus der Praxis sind Fahrwerke für medizinische Behandlungsvorrichtungen bekannt, die mit Rollen versehen ein rollendes Versetzen der auf einem Untergrund stehenden medizinischen Behandlungsvorrichtung erlauben.

Eine Aufgabe der vorliegenden Erfindung ist es, eine weitere medizinische Behandlungsvorrichtung mit einem Fahrwerk und ein Fahrwerk für eine medizinische Behandlungsvorrichtung vorzuschlagen.

Die erfindungsgemäße Aufgabe wird durch ein Fahrwerk mit den Merkmalen des Anspruchs 1 gelöst. Sie wird ferner gelöst durch eine medizinische Behandlungsvorrichtung, also eine Vorrichtung zum intra- oder extrakorporalen Behandeln eines Patienten oder seiner Organe oder Körperflüssigkeiten, mit den Merkmalen des Anspruchs.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Die medizinische Behandlungsvorrichtung weist wenigstens einen Gehäuseabschnitt und wenigstens ein Fahrwerk zu ihrer rollenden Fortbewegung auf.

Das Fahrwerk weist eine Laufrolle mit einer ersten Drehachse, alternativ einer Welle, und einer ersten Lauffläche auf. Die erste Lauffläche weist einen ersten Radius auf und dient zum rollenden Abstützen der medizinischen Behandlungsvorrichtung gegen den Untergrund, also die Aufstellfläche.

Die medizinische Behandlungsvorrichtung ist in ihrem Fahrwerk mit einer Haltevorrichtung ausgestattet, in oder an welcher die Drehachse gehalten wird.

Die medizinische Behandlungsvorrichtung ist zumindest mit einem Gehäuseabschnitt mittelbar oder unmittelbar mit der Haltevorrichtung des Fahrwerks verbunden, wobei die Haltevorrichtung hierzu optional einen eigenen Verbindungsabschnitt aufweisen kann.

Die medizinische Behandlungsvorrichtung weist in ihrem Fahrwerk eine zweite Lauffläche auf. Letztere ist angeordnet, um um eine zweite Drehachse (alternativ: Welle) drehbar zu sein. Die zweite Drehachse kann mit der ersten Drehachse identisch sein oder eine Verlängerung zu dieser darstellen. Die beiden Drehachsen können dieselbe Längsmittenachse haben.

Die medizinische Behandlungsvorrichtung weist in ihrem Fahrwerk eine zweite Lauffläche auf. Sie weist optional einen zweiten Radius auf. Der zweite Radius ist optional kleiner als der erste Radius.

Der Laufsteg des Fahrwerks steht mit seiner Oberseite in Kontakt zur zweiten Lauffläche und ist relativ zu dieser bewegbar.

Das erfindungsgemäße Fahrwerk der medizinischen Behandlungsvorrichtung, das alternativ als ein Fahrwerk für eine medizinische Behandlungsvorrichtung bezeichnet werden kann, weist wenigstens eine Laufrolle mit einer ersten Drehachse und einer ersten Lauffläche auf.

Das Fahrwerk ist mit einer Laufrolle ausgestattet, welche eine erste Drehachse oder Welle und eine erste Lauffläche aufweist. Die erste Lauffläche weist einen ersten Radius auf.

Weiter weist das Fahrwerk eine Haltevorrichtung auf, in oder an welcher die Drehachse gehalten wird.

Das Fahrwerk weist eine zweite Lauffläche auf. Sie ist angeordnet, um um eine zweite Drehachse oder Welle drehbar zu sein. Die zweite Drehachse kann mit der ersten Drehachse identisch sein. Sie kann eine Verlängerung der ersten Drehachse darstellen oder in einer Verlängerung liegen.

Die zweite Lauffläche des Fahrwerks weist optional einen zweiten Radius auf. Der zweite Radius ist optional kleiner als der erste Radius.

Schließlich weist das Fahrwerk einen Laufsteg auf, welcher in Kontakt zur zweiten Lauffläche steht und relativ zu dieser bewegbar ist.

Erfindungsgemäße Ausführungsformen können eines oder mehrere der vorstehend oder im Folgenden genannten Merkmale aufweisen. Dabei können die hierin genannten Merkmale in beliebiger Kombination Gegenstand von erfindungsgemäßen Ausführungsformen sein, sofern der Fachmann eine konkrete Kombination nicht als technisch unmöglich erkennt.

Erfindungsgemäße Ausführungsformen sind ferner Gegenstand der Unteransprüche und Ausführungsformen.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Wann immer hierin von einer Ausführungsform die Rede ist, so handelt es sich um eine beispielhafte, erfindungsgemäße Ausführungsform.

Die Angaben "oben" und "unten" sind hierin bei Zweifel des Fachmanns als absolute oder relative Raumangaben zu verstehen, welche sich auf die Ausrichtung des betreffenden Bauteils während seines üblichen Gebrauchs beziehen.

Erfindungsgemäß umfasst das Fahrwerk einen Laufsteg, der ein vorderes und ein hinteres Ende aufweist, wobei die beiden Enden jeweils, z. B. mittelbar oder unmittelbar, verbunden sind mit dem Gehäuseabschnitt, mit einem Abschnitt der Haltevorrichtung und/oder mit einem anderen Abschnitt des Fahrwerks, der relativ zur Haltevorrichtung feststeht, oder zu ihrer Verbindung vorbereitet sind.

In manchen Ausführungsformen der medizinischen Behandlungsvorrichtung ist der Laufsteg des Fahrwerks derart angeordnet, dass er, während die zweite Lauffläche beim Überwinden einer Schwelle (mit Schwelle als Beispiel für ein Hindernis, das auch eine kleinere Stufe, eine Türschwelle, ein Stromkabel, eine Aufzugstufe, eine Kante, eine Erhebung des Untergrunds, usw. sein kann) den Laufsteg entlangfährt oder entlangrollt, unter einem konstanten Winkel α zum Gehäuseabschnitt oder zum Untergrund steht. Ein derartiges Beispiel ist in Dokument JP 2006 131204 A offenbart.

Dieser Winkel α liegt vorzugsweise zwischen 1° und 45°. Alternativ sind auch andere Winkelgrößen von der vorliegenden Erfindung mit umfasst.

Dieser Winkel α kann zwischen Untergrund und Oberseite des Laufstegs liegen. Er kann alternativ zwischen Untergrund und Unterseite des Laufstegs liegen. Er kann im Falle, dass Oberseite und Unterseite des Laufstegs parallel verlaufen, zwischen Untergrund einerseits und sowohl Oberseite als auch Unterseite des Laufstegs andererseits liegen.

Dieser Winkel α ist vorzugsweise zumindest konstant, solange sich die zweite Lauffläche in einem mittleren Bereich des Laufstegs befindet. Ebenfalls von der Erfindung umfasst sind Ausgestaltungen, in welchen sich der Winkel α verändert, wenn sich die zweite Lauffläche im Bereich des hinteren und/oder des vorderen Endes des Laufstegs befindet oder den Laufsteg im Bereich des hinteren und/oder des vorderen Endes entlangfährt.

Weiter umfasst sind exemplarische Ausführungsformen, in welchen der Winkel α aufgrund der Ausgestaltung konstant ist, bis die Laufrolle das Höhenniveau des oberen Abschlusses der Schwelle erreicht hat, bis die Lauffläche der Laufrolle auf die Schwelle gerollt ist und/oder bis die Lauffläche der Laufrolle in Kontakt tritt mit der Schwelle, z. B. mit deren oberem Abschluss.

In einigen Ausführungsformen der medizinischen Behandlungsvorrichtung sind der Laufsteg des Fahrwerks und/oder ein Balken drehbar mit jeweils einem anderen Abschnitt des Fahrwerks oder mit dem Gehäuseabschnitt der medizinischen Behandlungsvorrichtung verbunden oder können zu ihrem Verbinden hiermit jeweils vorbereitet sein.

In einigen Ausführungsformen der medizinischen Behandlungsvorrichtung oder des erfindungsgemäßen Fahrwerks weist der erfindungsgemäße Gegenstand wenigstens einen Rückstellmechanismus auf. Dieser dient dazu, den Laufsteg, der sich beim Überwinden oder Erklimmen der Schwelle von einer ersten Position relativ zur Laufrolle in eine zweite Position relativ zur Laufrolle bewegt, nach Überwinden oder Erklimmen der Schwelle in die erste Position zurückzubewegen.

Der Rückstellmechanismus kann ein(e) oder mehrere Federn oder Federelemente aufweisen. Er kann ferner wenigstens ein biegsames Element wie einen Draht, ein Seil oder dergleichen aufweisen, der einstückig oder aus mehreren unterbrochenen Abschnitten besteht oder solche aufweist. Federn und biegsame(s) Element(e) können direkt bzw. indirekt mit demselben oder mit unterschiedlichen Abschnitten des Laufstegs verbunden sein.

Ist beispielsweise eine Feder, direkt oder indirekt (etwa mittels des biegsamen Elements) derart mit dem Laufsteg verbunden, dass sie aus einer ersten Richtung Zug auf den Laufsteg ausübt, und ist eine zweite Feder, direkt oder indirekt (etwa mittels des elastischen Elements) derart mit dem Laufsteg verbunden, dass sie in einer zweiten Richtung, die von der ersten Richtung verschieden ist, Zug auf den Laufsteg ausübt, so kann die Kombination dieser beiden Federelemente dazu führen, den Laufsteg nach Überwinden der Schwelle, bei welchem der Laufsteg aus einer Ruhelage oder Ausgangslage herausbewegt wurde, wieder in seine Ruhelage zurückzuführen.

In manchen Ausführungsformen der medizinischen Behandlungsvorrichtung ist der Laufsteg des Fahrwerks, insbesondere mit seinem hinteren Ende mittels einer ersten Feder, z. B. direkt oder indirekt, mit einem weiteren Abschnitt des Fahrwerks verbunden, der wiederum mit dem Gehäuseabschnitt der medizinischen Behandlungsvorrichtung verbunden oder zu seinem Verbinden hiermit jeweils vorbereitet sein kann.

In einigen Ausführungsformen der medizinischen Behandlungsvorrichtung ist der Laufsteg des Fahrwerks mit seinem vorderen Ende mittels einer zweiten Feder direkt oder indirekt mit einem weiteren Abschnitt des Fahrwerks oder mit dem Gehäuseabschnitt der medizinischen Behandlungsvorrichtung verbunden oder zu seinem Verbinden hiermit jeweils vorbereitet.

Federn, wie hierin genannt, können Druckfedern, Drehfedern, Blattfedern, Spiralfedern, Hydraulikfedern oder Wellenfedern sein. Alternativ und/oder ergänzend sind andere Federarten von der Erfindung ebenfalls umfasst, ebenso eine Kombination aus mehreren und/oder verschiedenen Federn.

In manchen Ausführungsformen der medizinischen Behandlungsvorrichtung ist die zweite Lauffläche Teil einer zweiten Rolle.

In einigen Ausführungsformen der medizinischen Behandlungsvorrichtung ist die zweite Lauffläche mit der Laufrolle nicht form- und/oder nicht kraftschlüssig verbunden oder gekoppelt.

In manchen Ausführungsformen ist der Laufsteg angeordnet, um beim oder zum Überwinden einer Schwelle aus einer ersten Position bezogen auf die Laufrolle in eine zweite Position bezogen auf die Laufrolle bewegt zu werden. Das Fahrwerk weist optional einen Rückstellmechanismus auf, welcher ausgestaltet ist, um den Laufsteg aus der zweiten Position, insbesondere selbsttätig, z. B. mittels eines oder mehrerer Federelemente oder Rückstelleinrichtungen, in die erste Position zurückzuführen.

Die medizinische Behandlungsvorrichtung kann eine Dialysevorrichtung, Peritonealdialysevorrichtung, Hämodialysevorrichtung, Hämofiltrationsvorrichtung oder Hämodiafiltrationsvorrichtung, insbesondere eine Vorrichtung für die chronische Nierenersatztherapie oder für die kontinuierliche Nierenersatztherapie (CRRT = continuous renal replacement therapy) sein.

In einigen Ausführungsformen weist der Laufsteg des Fahrwerks ein vorderes und ein hinteres Ende auf. Dabei sind die beiden Enden jeweils mittelbar oder unmittelbar mit einem Abschnitt der Haltevorrichtung verbunden oder zu ihrem Verbinden mit dem Gehäuseabschnitt vorbereitet.

In manchen Ausführungsformen ist der Laufsteg des Fahrwerks der medizinischen Behandlungsvorrichtung ein Laufband.

In manchen Ausführungsformen stellt die Haltevorrichtung einen im Gebrauch und insbesondere beim Überwinden von Stufen oder Erhebungen des Untergrunds unveränderlichen oder unveränderten Abstand zwischen Drehachse und Gehäuseabschnitt sicher.

In manchen Ausführungsformen weist der Laufsteg keine Rolle auf, die an einer Schiene entlangläuft.

In einigen Ausführungsformen weist das Fahrwerk keine zwei Schienen oder "races" auf, entlang welcher sich der Laufsteg beim Überwinden eines Hindernisses wie einer Schwelle (Hindernisse auch zusammenfassend: Schwelle) bewegt.

In manchen Ausführungsformen ändert sich der Abstand zwischen Laufsteg und Drehachse der Laufrolle nicht, insbesondere wird dieser Abstand nicht geringer, insbesondere nicht beim Überwinden einer Schwelle.

In manchen Ausführungsformen ist der Laufsteg an seiner Unterseite und/oder an seiner Oberseite nicht konvex zu einem Untergrund der Behandlungsvorrichtung.

In einigen Ausführungsformen weist der Laufsteg keine Rolle auf, insbesondere nicht derart, dass eine Achse einer Rolle im oder am Laufsteg gelagert wäre.

In manchen Ausführungsformen steht der Laufsteg nicht mittels Zahnradabschnitten oder Zahnverbindungen mit der zweiten Lauffläche in Eingriff.

In einigen Ausführungsformen weist das Fahrwerk keine zwei Rollen oder Fahrrollen auf, die hintereinander angeordnet sind und direkt oder indirekt in derselben Haltevorrichtung gehalten sind und/oder unter derselben Ecke der medizinischen Behandlungsvorrichtung angeordnet sind.

In manchen Ausführungsformen weist das Fahrwerk keine zwei parallele, voneinander beabstandete Drehachsen für Elemente, die eine Lauffläche aufweisen, auf, sondern vorzugweise nur eine bzw. eine gemeinsame.

In einigen Ausführungsformen hat eine beliebige Kombination von Rollen einer Gruppe, die aus der Laufrolle, der weiteren Laufrolle und der zweiten Lauffläche besteht, eine gemeinsame Drehachse. Die gemeinsame Drehachse kann eine körperlichstrukturelle Achse oder Welle sein.

In manchen Ausführungsformen haben die Laufrolle und die weitere Laufrolle denselben Innendurchmesser, Außendurchmesser und/oder Umfang.

In einigen Ausführungsformen stellt die Haltevorrichtung einen im Gebrauch und insbesondere beim Überwinden von Stufen und/oder Erhebungen des Untergrunds unveränderten oder unveränderlichen Abstand zwischen Drehachse und Gehäuseabschnitt sicher.

In manchen Ausführungsformen ist die medizinische Behandlungsvorrichtung kein Tischgerät.

Exemplarische Ausgestaltungen der erfindungsgemäßen Behandlungsvorrichtung sind im Folgenden beschrieben.

In einigen Ausführungsformen ist die erfindungsgemäße Behandlungsvorrichtung mit einem extrakorporalen Blutkreislauf verbunden.

Der extrakorporale Blutkreislauf weist optional eine erste Leitung, hier in Form eines arteriellen Leitungsabschnitts, auf.

Die erste Leitung steht in Fluidverbindung mit einer Blutbehandlungseinrichtung, hier exemplarisch ein Blutfilter oder Dialysator. Der Blutfilter weist eine Dialysierflüssigkeitskammer und eine Blutkammer auf, welche durch eine zumeist semi-permeable Membran voneinander getrennt sind.

Der extrakorporale Blutkreislauf weist optional ferner wenigstens eine zweite Leitung, hier in Form eines venösen Leitungsabschnitts, auf. Sowohl die erste Leitung als auch die zweite Leitung können zur Verbindung mit dem Gefäßsystem des Patienten dienen.

Die erste Leitung ist optional mit einer (ersten) Schlauchklemme zum Sperren oder Schließen der Leitung verbunden. Die zweite Leitung ist optional mit einer (zweiten) Schlauchklemme zum Sperren oder Schließen der Leitung verbunden.

Die erfindungsgemäße Behandlungsvorrichtung weist in manchen Ausführungsformen eine Blutpumpe auf. Die Blutpumpe fördert während der Behandlung des Patienten Blut durch Abschnitte des extrakorporalen Blutkreislaufs und in Richtung zum Blutfilter oder Dialysator.

Mittels einer Pumpe für Dialysierflüssigkeit, die als Rollenpumpe oder als anderweitig okkludierende Pumpe ausgestaltet sein kann, wird frische Dialysierflüssigkeit aus einer Quelle entlang einer Dialysierflüssigkeitszulaufleitung in die Dialysierflüssigkeitskammer gepumpt. Die Dialysierflüssigkeit verlässt die Dialysierflüssigkeitskammer als Dialysat, ggf. angereichert durch Filtrat, in Richtung des Ausgusses.

Die Quelle kann beispielsweise ein Beutel oder ein Container sein. Die Quelle kann ferner eine Fluidleitung sein, aus der online und/oder kontinuierlich erzeugte oder gemischte Flüssigkeit bereitgestellt wird, z. B. ein Hydraulikausgang oder -anschluss der Blutbehandlungsvorrichtung.

Eine weitere Quelle mit Substituat kann optional vorgesehen sein. Sie kann der Quelle entsprechen oder eine eigene Quelle sein.

Stromauf der Blutpumpe ist ein optionaler arterieller Sensor vorgesehen. Während einer Behandlung des Patienten misst er den Druck in der arteriellen Leitung.

Stromab der Blutpumpe, jedoch stromauf des Blutfilters und, falls vorgesehen, einer Zugabestelle für Heparin, ist ein weiterer, optionaler Drucksensor vorgesehen. Er misst den Druck stromauf des Blutfilters ("prä-Hämofilter").

Ein wiederum weiterer Drucksensor kann stromab des Blutfilters, jedoch vorzugsweise stromauf der Pumpe in der Dialysatablaufleitung zum Messen des Filtratdrucks oder Membrandrucks des Blutfilters vorgesehen sein.

Blut, das den Blutfilter verlässt, durchströmt eine optionale venöse Blutkammer, welche eine Entlüftungseinrichtung aufweisen und mit einem weiteren Drucksensor in Fluidverbindung stehen kann.

Die erfindungsgemäße Behandlungsvorrichtung weist exemplarisch eine Steuer- oder Regelvorrichtung auf. Sie kann mit jeder der hierin genannten Komponenten - jedenfalls oder insbesondere mit der Blutpumpe - in kabelgebundener oder kabelloser Signalverbindung zur Steuerung oder Regelung der Blutbehandlungsvorrichtung stehen. Sie ist optional konfiguriert, um das hierin beschriebene Verfahren auszuführen, insbesondere automatisch.

Alternativ zu der hier gezeigten Ausführungsform kann die Blutbehandlungsvorrichtung eine Vorrichtung zur Online-Mischung der Dialysierflüssigkeit aus mehreren Komponenten, zu denen ein saures Konzentrat, eine Bicarbonat-Komponente und Umkehrosmosewasser gehören kann, aufweisen.

Manche oder alle erfindungsgemäßen Ausführungsformen können einen, mehrere oder alle der oben und/oder im Folgenden genannten Vorteile aufweisen.

So kann die erfindungsgemäße Behandlungsvorrichtung vorteilhaft mittels des Fahrwerks über Schwellen hinweg oder Stufen hinaufgeschoben werden.

In manchen Ausführungsformen ist das hierzu verwendete Fahrwerk vergleichsweise einfach und robust.

Der Laufsteg kann durch seine frei bestimmbare Länge lang genug sein, um ein Überwinden von Schwellen unterschiedlicher Höhe zu ermöglichen. Stellt man ihn sich als steifes Element, mit vorzugsweise gerader Unterseite oder geraden Abschnitten hiervon vor, so dient er als schiefe Ebene. Es ist in solchen Ausgestaltungen, wie sie z. B. auch in den Figuren gezeigt sind, nicht von vorherrschender Bedeutung, wie hoch die konkrete Schwelle, die es zu überwinden gilt, ist. Das Fahrwerk trifft stets mit dem Laufsteg als schiefer Ebene auf die obere oder vordere Kante der Schwelle. Das Fahrwerk muss, anders ausgedrückt, nicht vorab auf konkrete Höhen von Schwellen, die es später einmal mit der Behandlungsvorrichtung zu überwinden gilt, ausgestaltet oder angepasst sein.

Dient der Laufsteg - im Gebrauch, d. h. beim Überwinden der Schwelle - als schiefe Ebene, so stützt er sich sowohl am Untergrund als auch an einer Kante oder einem anderen Abschnitt ab. Gewichtskräfte der auf dieser schiefen Ebene nach oben rollenden oder gleitenden medizinischen Behandlungsvorrichtung werden somit im Moment des Überwindens der Schwelle von der schiefen Ebene aufgenommen, die ihrerseits vom Untergrund bzw. der Schwelle selber gestützt wird. Auf diese Weise wird das übrige Fahrwerk davor bewahrt, von der Behandlungsvorrichtung herrührende Gewichtskräfte aufnehmen zu müssen. Dies mag vorteilhaft zu geringeren Anforderungen an Geometrie, Material, Gelenke und mehr führen.

Von Vorteil kann ferner sein, dass das Fahrwerk nachgerüstet werden kann. Es kann so konzipiert sein, dass ein einfaches Auswechseln vorhandener Rollen bereits erworbener Behandlungsvorrichtungen gegen das erfindungsgemäße Fahrwerk auch noch beim Kunden (z. B. in der Klinik, Praxis, usw.) zu einer erfindungsgemäßen Behandlungsvorrichtung führen kann.

Von Vorteil kann ferner die - bei Vergleich mit dem aus der Praxis Bekannten - mittels des erfindungsgemäßen Fahrwerks erzielbare, höhere Kippsicherheit, insbesondere im Moment des Überwindens der Schwelle, sein. Dies kann vor allem bei der Verwendung der vorliegenden Erfindung im Zusammenhang mit oder an Behandlungsvorrichtungen wie der hierin genannten Blutbehandlungsvorrichtungen von Vorteil sein. Diese, aber auch andere Behandlungsvorrichtungen sind regelmäßig höher als 100 cm, 150 cm oder mehr, z. T. bis zu 200 cm (z. B. als Dialysevorrichtung, die eine Infusionsstange aufweist), haben regelmäßig eine Breite von 50 cm und mehr, eine Tiefe von 70 cm und mehr und/oder haben z. T. eine Masse von mehr als 50, 70 oder 100 kg.

Sollen herkömmliche medizinische Behandlungsvorrichtungen über Schwellen hinweg geschoben werden, so werden sie in der Praxis bis an die Schwelle herangerollt und dort soweit gegen die Fahrrichtung gekippt, dass sich die vorderen Laufrollen ausreichend hoch über dem Untergrund in der Luft befinden, um in einer Bewegung von oben nach unten oder in einer horizontalen Bewegung auf einer Oberkante der Schwelle aufgesetzt zu werden. Aufgrund des hohen Gewichts der medizinischen Behandlungsvorrichtung, das i. a. R. höher als das Körpergewicht des die medizinische Behandlungsvorrichtung schiebenden Personals oder (in der Heimdialyse) des Patienten ist, sind hierzu große Anstrengungen erforderlich. Regelmäßig wird daher an der medizinischen Behandlungsvorrichtung gerissen, damit sich diese mit den vorderen Laufrollen vom Untergrund abhebt. Die Gefahr, hierbei zu überreißen liegt auf der Hand. Aus diesem Grund können selbst schwere medizinische Behandlungsvorrichtungen - zumeist nach hinten - kippen. Nicht anders ist es, wenn die medizinische Behandlungsvorrichtung mit ihrer Rückseite voraus bis an die Schwelle gefahren wird, um dann zum Überwinden der Schwelle leicht gekippt zu werden.

Diese Gefahr besteht bei der Nutzung des erfindungsgemäßen Fahrwerks nicht oder ist deutlich niedriger. Denn anders als beim oben skizzierten Vorgehen zum Überwinden von Schwellen mit herkömmlichen medizinischen Behandlungsvorrichtungen sind erfindungsgemäß keine besonders großen und insbesondere keine abrupten Kräfte nötig. Die medizinische Behandlungsvorrichtung rollt vielmehr stetig über den Laufsteg, der als schiefe Ebene den Höhenunterschied zwischen Untergrund und Oberkante der Schwelle überbrücken kann. Der Laufsteg kann die Funktion einer Rampe annehmen. Seine Neigung ist konstruktiv bedingt und kann von Seiten des Herstellers geeignet vorgegeben werden.

Die vorliegende Erfindung wird im Folgenden anhand der beigefügten Zeichnung, in welcher gleiche Bezugszeichen gleiche oder ähnliche Bauteile bezeichnen, exemplarisch und z. T. stark schematisch vereinfacht erläutert. In den Figuren gilt:
- Fig. 1: zeigt ein erfindungsgemäßes Fahrwerk von der Seite bei geringer Perspektive von oben in einer ersten exemplarischen Ausführungsform;
- Fig. 2: zeigt das erfindungsgemäße Fahrwerk der Fig. 1 als Teil einer mittels ihres Gehäuseabschnitts nur angedeuteten medizinischen Behandlungsvorrichtung von hinten in leichter Drehung zur Seite;
- Fig. 3: zeigt das erfindungsgemäße Fahrwerk der Fig. 1 und Fig. 2 mit Blick auf deren Seite in leichter Perspektive von hinten;
- Fig. 4: zeigt das erfindungsgemäße Fahrwerk in einer weiteren Ausführungsform, welche auf jener der Fig. 1 bis Fig. 3 basiert, dargestellt von der Seite;
- Fig. 4a, 4b, 4c, 4d: zeigen vier Phasen des Überwindens einer Schwelle mittels des Fahrwerks der Fig. 4, jeweils von der Seite;
- Fig. 5a, 5b, 5c: zeigen je eine weitere Ausführungsform des erfindungsgemäßen Fahrwerks;
- Fig. 6a, 6b: zeigen je eine weitere Ausführungsform der erfindungsgemäßen medizinischen Behandlungsvorrichtung mit einem erfindungsgemäßen Fahrwerk; und
- Fig. 7: zeigt eine weitere Ausführungsform des erfindungsgemäßen Fahrwerks für eine in Fig. 7 nicht gezeigte erfindungsgemäße medizinische Behandlungsvorrichtung.

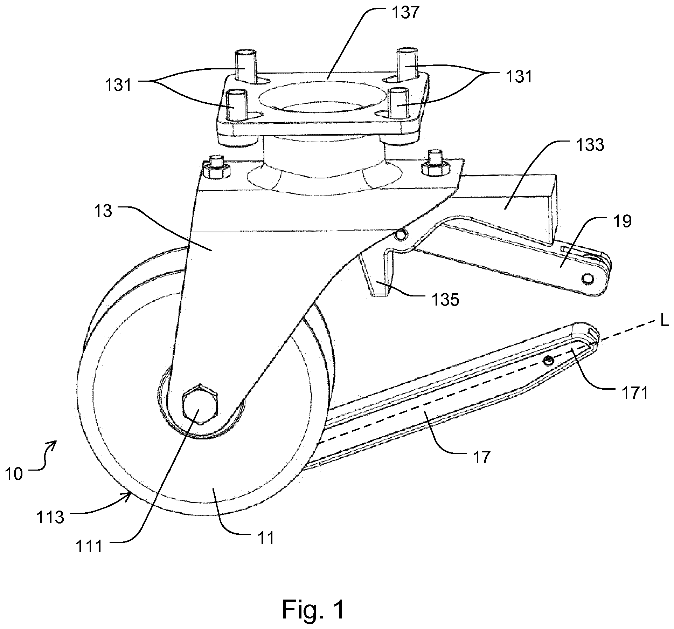

**Fig. 1** zeigt eine erste Ausführungsform des erfindungsgemäßen Fahrwerks 10 von der Seite bei geringer Perspektive von oben. Dieses weist wenigstens eine Laufrolle 11 mit einer ersten Drehachse 111 oder Welle, die in einer Haltevorrichtung 13 des Fahrwerks 10 gehalten ist, auf.

Die Laufrolle 11 weist eine erste Lauffläche 113 auf, mit welcher die Laufrolle 11 im Gebrauch in Kontakt mit dem Untergrund, z. B. dem Boden des Patientenzimmers, stehen wird.

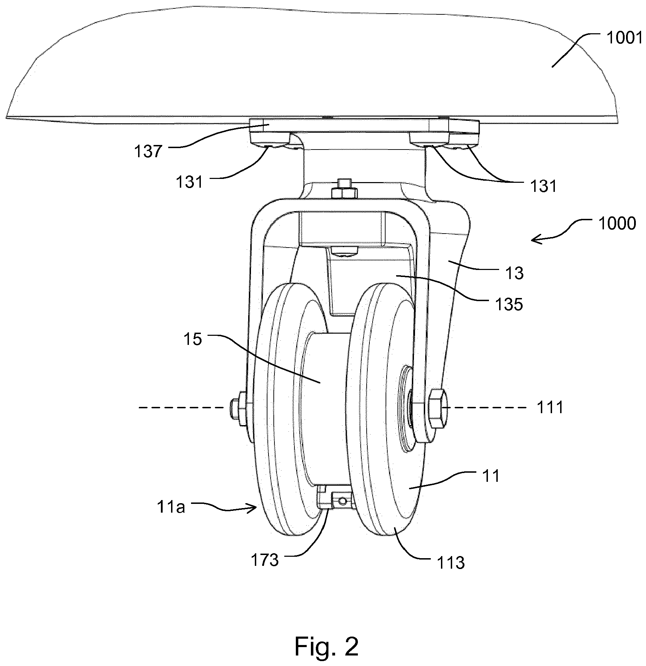

Das Fahrwerk 10 weist ferner einen Laufsteg 17 oder ein Laufband mit einem vorderen Ende 171 und einem hinteren Ende 173 (siehe Fig. 2) auf. Das vordere Ende 171 liegt in einer Bewegungsrichtung des Fahrwerks 10 beim Überwinden einer Stufe oder eines Hindernisses vor dem hinteren Ende 173 und, bezogen auf Fig. 1, weiter rechts als das hintere Ende 173. Die Längserstreckung des Laufstegs 17 ist mit "L" bezeichnet und mittels Strichlinie eingezeichnet.

Der Laufsteg 17 dient einer zweiten Lauffläche 15 des Fahrwerks 10, welche in Fig. 1 nicht gezeigt ist (siehe jedoch Fig. 2), beim Überwinden einer Stufe oder eines Hindernisses als Rollfläche oder, allgemeiner, als Untergrund.

Die zweite Lauffläche 15 ist von der ersten Lauffläche 113 verschieden.

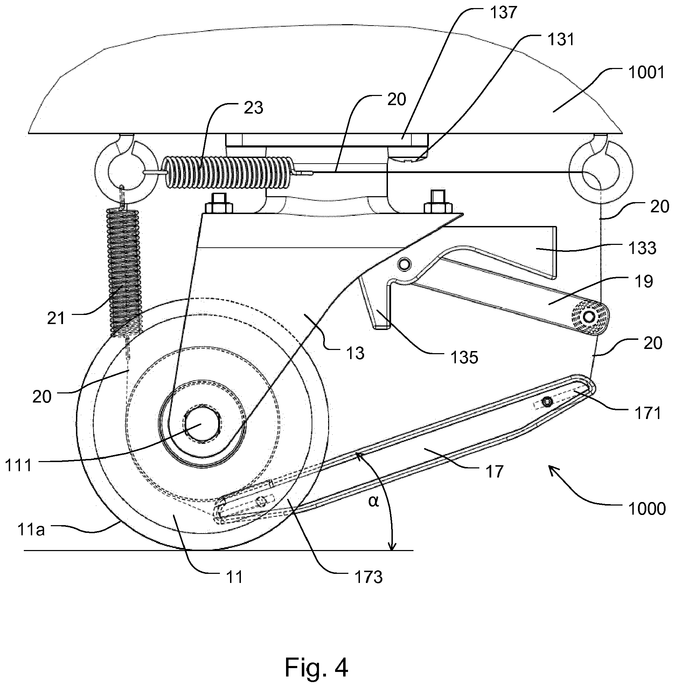

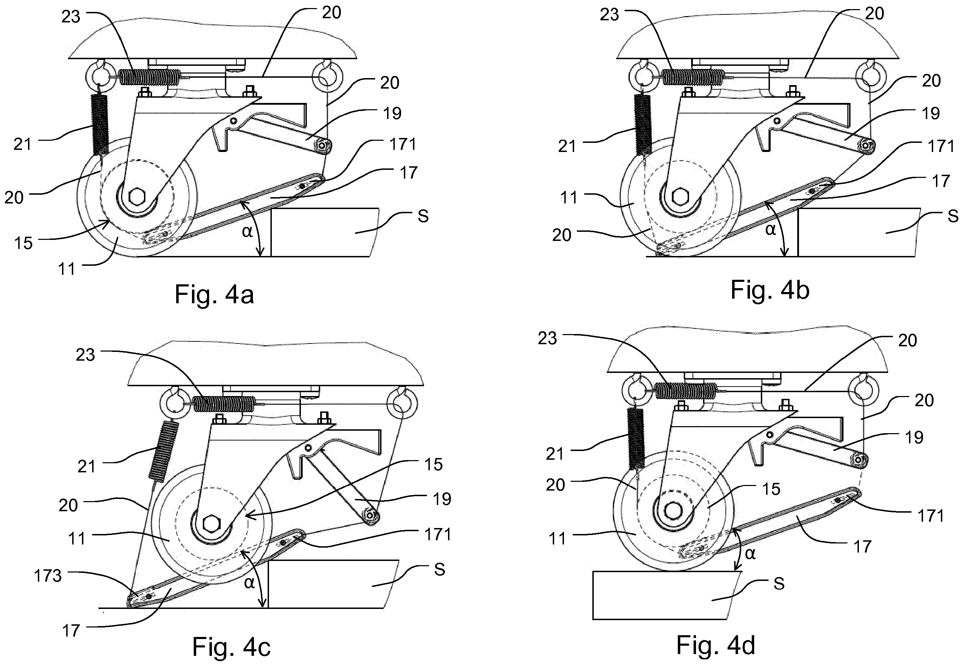

Das Fahrwerk 10 weist ferner einen optionalen Balken 19 auf. Der Balken 19 ist vorgesehen, um im Gebrauch mit einem Ende oder einem Abschnitt hiervon drehbar (direkt oder indirekt) einen Anfangswert des Winkels α zwischen dem Laufsteg 17 und dem Untergrund oder einem Abschnitt von Fahrwerk 10 oder Gehäuse 1001 zu gewährleisten, wie dies auch in Fig. 4 gezeigt ist.

Mit seinem anderen Ende oder mit einem anderen Abschnitt ist der Balken 19 vorgesehen, drehbar (direkt oder indirekt) an und/oder zu einem Abschnitt von Fahrwerk 10 oder Gehäuse 1001 verbunden zu werden, welcher relativ zur Drehachse 111 einen festen Abstand hat.

Optional weist die Haltevorrichtung 13 einen ersten oder vorderen Anschlag 133 und einen hinteren oder zweiten Anschlag 135 auf. Sie können im Gebrauch die Drehbewegung des Balkens 19 nach vorne (d. h. gegen den Uhrzeigersinn, bezogen auf die Seitenansicht der Fig. 1) und/oder nach hinten (d. h. mit dem Uhrzeigersinn, bezogen auf die Seitenansicht der Fig. 1) begrenzen.

Nicht gezeigt ist in Fig. 1 die erfindungsgemäße medizinische Behandlungsvorrichtung, an welcher das Fahrwerk 10 im Gebrauch befestigt ist.

In Fig. 1 sind jedoch optionale Schrauben 131 gezeigt, mittels welcher das Fahrwerk 10 mit einem Verbindungsabschnitt 137 hiervon an einem Gehäuseabschnitt 1001 (siehe Fig. 2) der Behandlungsvorrichtung 1000 (siehe Fig. 2) befestigt werden kann.

**Fig. 2** zeigt das erfindungsgemäße Fahrwerk 10 der Fig. 1 als Teil einer mittels ihres Gehäuseabschnitts 1001 nur angedeuteten medizinischen Behandlungsvorrichtung 1000.

Das Fahrwerk 10 ist von hinten gezeigt. Aus Gründen der Übersichtlichkeit sind einige der in Fig. 1 gezeigten Komponenten in Fig. 2 nicht dargestellt.

Gut zu erkennen ist das hintere Ende 173 des Laufstegs 17. Zu erkennen ist auch, dass der Laufsteg 17 der zweiten Lauffläche 15 von unten anliegt. Die zweite Lauffläche 15 ist in Fig. 2 exemplarisch als Umfangsfläche einer zweiten Rolle gezeigt. Die zweite Rolle kann mit der Laufrolle 11 in Drehverbindung verbunden sein, wie im Beispiel der Fig. 2, so dass sich die zweite Rolle und folglich auch die zweite Lauffläche 15 dreht, wenn sich die Laufrolle 11 dreht. Alternativ kann die zweite Rolle, welche die Lauffläche 15 aufweist, jedoch freidrehend zur Laufrolle 11 vorgesehen sein, so dass sich die Laufrolle 11 und die zweite Rolle unabhängig voneinander drehen können.

Wie Fig. 2 weiter zu entnehmen ist, kann ergänzend zur Laufrolle 11 eine weitere Laufrolle 11a vorgesehen sein. Die weitere Laufrolle 11a kann wie die Laufrolle 11 von der Haltevorrichtung 13 getragen werden. Die Laufrolle 11 und die weitere Laufrolle 11a können um eine gemeinsame Drehachse 111, wie in Fig. 2 gezeigt, drehen. Sie können beabstandet sein, und wie im Beispiel der Fig. 2 den Laufsteg 17 zwischen sich aufnehmen und/oder jeweils seitlich begrenzen oder dadurch führen. Weitere Führungen des Laufstegs 17 im Bereich der Laufrolle 11 können somit überflüssig sein.

Sowohl die Laufrolle 11 als auch die weitere Laufrolle 11a können mittels ihrer Laufflächen zur Abstützung der medizinischen Behandlungsvorrichtung 1000 gegen deren Aufstellfläche (also den Untergrund) dienen.

Fig. 2 ist ebenfalls zu entnehmen, dass die Laufrolle 11 einen größeren Außenradius oder Laufradius (Radius der Lauffläche 113) aufweist als die zweite Lauffläche 15.

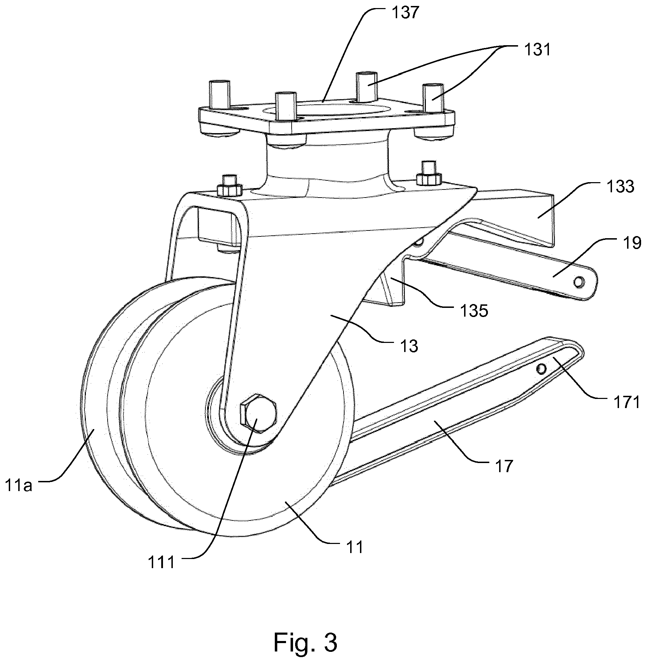

**Fig. 3** zeigt das erfindungsgemäße Fahrwerk 10 der Fig. 1 und Fig. 2 mit Blick auf deren Seite in leichter Perspektive von hinten.

Fig. 3 ist zu entnehmen, dass die Laufrolle 11 optional einen größeren Außenradius oder Laufradius (Radius der Lauffläche 113) aufweist als die zweite Lauffläche 15 und die Dicke des Laufstegs 17 im Bereich dessen hinteren Endes 173 zusammen.

**Fig. 4** zeigt das erfindungsgemäße Fahrwerk 10 in einer weiteren Ausführungsform, welche auf jener der Fig. 1 bis Fig. 3 basiert, dargestellt von der Seite.

Zu erkennen ist, dass der Balken 19, der nun gebrauchsbereit mit einem Abschnitt der Haltevorrichtung 13 drehbar befestigt ist, einen Anfangswert des Winkels α zwischen dem Laufsteg 17 und dem Untergrund oder einem Abschnitt von Fahrwerk 10 oder Gehäuse 1001 gewährleistet.

Die Drehbarkeit liegt in einer Ebene, welche senkrecht auf der Drehachse 111 der Laufrollen 11 und 11a steht.

Die erfindungsgemäße Behandlungsvorrichtung 1000 oder das erfindungsgemäße Fahrwerk 10 können einen Rückstellmechanismus aufweisen. Dieser dient dazu, den Laufsteg 17, der sich beim Überwinden oder Erklimmen der Schwelle S von einer ersten Position relativ zur Laufrolle 11 in eine zweite Position relativ zur Laufrolle 11 bewegt, nach Überwinden oder Erklimmen der Schwelle S in die erste Position zurückzubewegen. Die erste Position ist für diese Ausführungsform in Fig. 4 und Fig. 4a gezeigt. Die zweite Position ist in Fig. 4c gezeigt. In der ersten Position kann der Winkel α gleich sein wie in der zweiten Position. Gleichzeitig ist in der ersten Position der Winkel zwischen dem Balken 19 und dem Untergrund größer als in der zweiten Position. Schließlich kann sich der Laufsteg 17 in der zweiten Position weiter zurückbewegen oder weiter zurück liegen (bezogen auf die Fahrtrichtung) als in der ersten Position.

Der Rückstellmechanismus kann die erste Feder 21 und/oder die zweite Feder 23 aufweisen, ferner den Balken 19, ferner die Verbindungen zwischen den Federn 21, 23 und dem Laufsteg 17.

Der Laufsteg 17 ist, z. B. mit seinem vorderen Ende 171 und z. B. mit seinem hinteren Ende 173 oder jeweils mit anderen Abschnitten, mit je einer Rückstelleinrichtung verbunden.

Im Beispiel der Fig. 4 sind beide Rückstelleinrichtungen als Federn 21, 23 ausgestaltet, mit welchen der Laufsteg 17 mittels Seilen oder anderen Verbindern verbunden ist, hier mittels eines mehrteiligen biegsamen Elements 20. Das biegsame Element 20 kann auf der zweiten Lauffläche 15 oder an anderer Stelle geführt und/oder umgelenkt werden.

Die Rückstelleinrichtungen, hier die Federn 21, 23, sind ihrerseits optional mit je einem (optional auch gemeinsamen) Abschnitt des Gehäuseabschnitts 1001 oder einem hierzu in festem Abstand stehenden Abschnitt verbunden.

Alternativ können die Rückstelleinrichtungen optional mit je einem (optional auch gemeinsamen) Abschnitt des Fahrwerks 10, beispielsweise dessen Haltevorrichtung 13, verbunden sein, der in festem Abstand zur Drehachse steht.

Alternativ genügt es, nur einen Abschnitt des Laufstegs 17 mit einer wie auch immer ausgestalteten Rückstelleinrichtung zu verbinden.

Alternativ genügt eine statt zwei oder mehr Rückstelleinrichtungen.

Die hierin genannten Rückstelleinrichtungen können Teil des Rückstellmechanismus sein.

Ferner gilt, dass die in Fig. 4 gezeigten Federn 21, 23 nur exemplarisch als Zugfedern ausgestaltet sind. Anstelle oder ergänzend zu Zugfedern können andere Federtypen zum Einsatz kommen, z. B. Blattfedern, Hydraulikfedern oder Drehfedern. Letztere, und insbesondere Drehfedern, erlauben eine besonders raumsparende Anordnung.

Federn, welche z. B. als Drehfedern vorgesehen sind, und welche vorzugsweise allein mit Abschnitten des Fahrwerks 10, anders als die Federn 21, 23 der Fig. 4 nicht auch mit Abschnitten des Gehäuses der Behandlungsvorrichtung 1000 verbunden sind, können zudem erlauben, einen Schwenkmechanismus vorzusehen, mittels welchem das Fahrwerk 10 lenkbar oder um seine (oder eine andere) Längsachse drehbar ist, wodurch ein Richtungswechsel der Laufrolle 11 möglich wird. Eine solche Längsachse könnte in Fig. 1 in einer Richtung von oben nach unten verlaufen.

Das erfindungsgemäße Fahrwerk 10 ist vorgesehen, um wie mit Bezug auf die **Fig. 4a** bis **Fig. 4d** exemplarisch an einem Beispiel erläutert, ein Überwinden einer Schwelle S, Stufe, Kante oder dergleichen (kurz: Schwelle) zu ermöglichen, etwa wie im Folgenden beschrieben:
Fährt die Behandlungsvorrichtung 1000 auf eine Schwelle S zu, die höher als der Untergrund ist, so trifft die Schwelle S auf oder gegen die Unterseite des Laufstegs 17, was in Fig. 4a gezeigt ist. Die Unterfläche des Laufstegs 17, der sich in Fig. 4a in seiner ersten Position befindet, kann ausgestaltet sein, um zusammen mit dem Gewicht der Behandlungsvorrichtung 1000 eine ausreichend hohe Haftreibung zu bewirken. Die Haftreibung stellt sicher, dass die Unterseite des Laufstegs 17 und damit der Laufsteg 17 selber mit einem vorderen Abschnitt hiervon an der Schwelle S hängenbleibt. Dies hat zur Folge, dass der Laufsteg 17, zumindest in der in den Figuren exemplarisch gezeigten Ausgestaltung, als schiefe Ebene den Höhenunterschied zwischen Untergrund und Oberkante der Schwelle S überbrückt. Über diese schiefe Ebene kann die Behandlungsvorrichtung 1000 nun geschoben werden, wobei die zweite Lauffläche 15 auf der Oberseite des Laufstegs 17 hinaufgerollt werden kann, was in Fig. 4b beginnt und in Fig. 4c weiter fortgeschritten zu erkennen ist. Die Haftreibung der Oberseite des Laufstegs 17 kann sicherstellen, dass die Behandlungsvorrichtung 1000 nicht der Schwerkraft folgend den Laufsteg 17 wieder hinunterrollt oder auf diesem hinabrutscht. In Fig. 4c hat sich der Laufsteg 17 erkennbar aus seiner ersten Position herausbewegt. Er nimmt eine (von mehreren, verschiedenen, möglichen) zweiten Positionen an.

Zum Erzielen der gewünschten Haftwirkung können die Oberseite und/oder die Unterseite des Laufstegs 17 entsprechend aufgeraut, beschichtet oder aus geeignetem Material gefertigt sein. Dasselbe kann für die zweite Lauffläche 15 gelten.

Der drehbare Balken 19 stellt sicher, dass der Laufsteg 17 zwar einerseits relativ zur Laufrolle 11 bewegbar ist, andererseits mit seinem vorderen Ende 171 eine Mindesthöhe über dem Untergrund erreicht und somit der zweiten Lauffläche 15 eine Steigung bietet, entlang welcher sie an Höhe gewinnen kann, um die Schwelle S zu überwinden. Ist der Laufsteg 17 mittels des Balkens 19 relativ zur Drehachse 111 der Laufrolle 11 bewegbar, so ist er auch zur Drehachse der zweiten Lauffläche 15 bewegbar, da die Drehachse 111 der Laufrolle 11 der Drehachse der zweiten Lauffläche 15 entspricht oder eine Verlängerung derselben darstellt.

Die Rückstellvorrichtungen, hier optional die Federn 21, 23, sorgen dafür, den Laufsteg 17 nach Überwinden der Schwelle S wieder in die in Fig. 4 oder Fig. 4d gezeigte Ausgangs- oder Parkposition des Laufstegs 17 zurückzuführen.

Den Fig. 4a bis 4d ist zu entnehmen, dass der Winkel α konstant sein kann vom Moment, in welchem der Laufsteg 17 seinerseits in Kontakt mit dem Untergrund kommt, da, oder wobei, er über die zweite Lauffläche 15 mit einem Teil des Gewichts der Behandlungsvorrichtung belastet wird, bis zum dem Moment, in welchem die Laufrolle 11 bzw. deren Lauffläche 113 in Kontakt mit der Oberseite der Schwelle S tritt. Der letztgenannte Moment liegt zeitlich zwischen den Phasen, die in Fig. 4c und Fig. 4d dargestellt sind. Ab diesem Moment kann der Winkel α sich auch in der in den Fig. 4a bis 4d gezeigten Ausführungsform ändern, hier verringern. Er nimmt seinen ursprünglichen Wert wieder nach vollständigem Überwinden des durch die Schwelle S bedingten Höhenunterschieds durch die Laufrolle 11 an, was in Fig. 4d gezeigt ist. Der Rückstellmechanismus, der z. B. die erste Feder 21 und die zweite Feder 23 aufweist, kann hierzu beitragen oder verantwortlich sein.

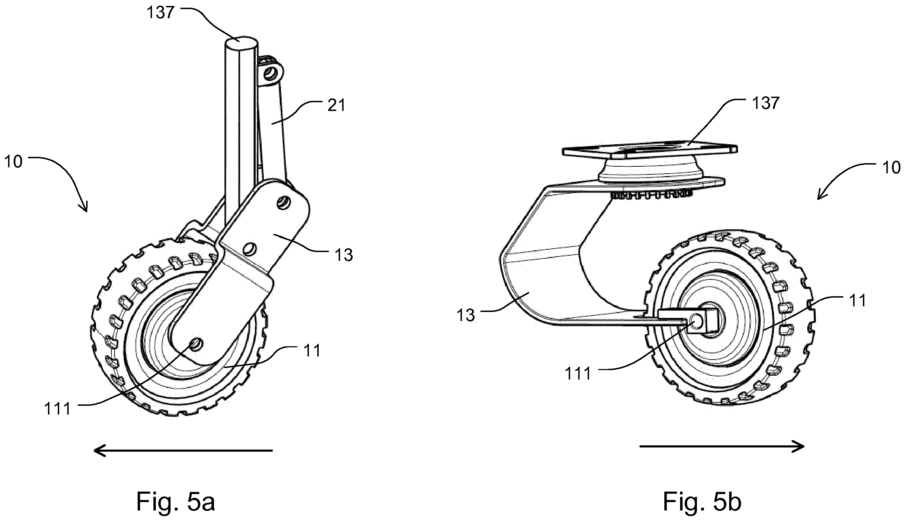

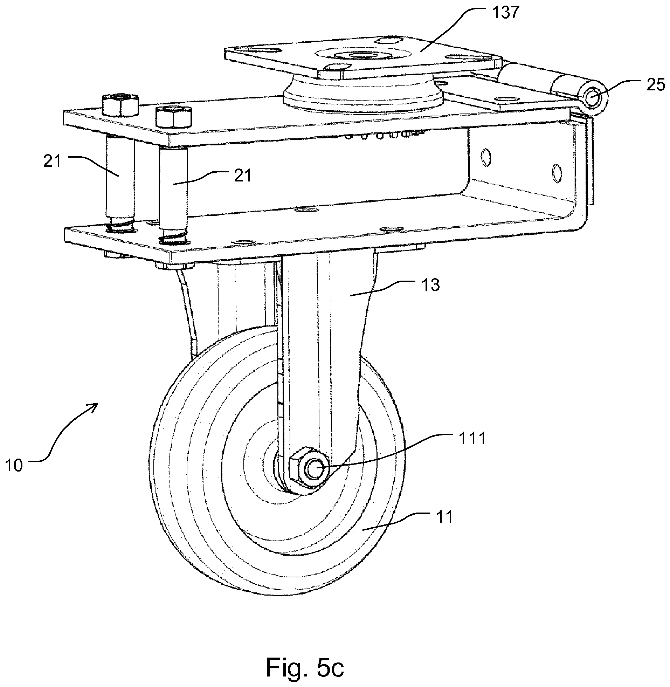

**Fig. 5a, 5b** und **5c** zeigen je eine weitere Ausführungsform des erfindungsgemäßen Fahrwerks 10.

Das Fahrwerk 10 hat jeweils wenigstens eine Laufrolle 11, die in der Haltevorrichtung 13 drehbar gehalten ist. Zwischen dem Verbindungsabschnitt 137 und der Laufrolle 11 ist entweder wenigstes eine Feder 21 (Fig. 5a und Fig. 5c) oder ein federnder Abschnitt, z. B. in Gestalt einer federnd geformten Haltevorrichtung 13 oder eines Federblechs (Fig. 5b) vorgesehen.

Fährt die Laufrolle 11 gegen eine Schwelle S (die Fahrtrichtung ist jeweils unter der Laufrolle 11 mittels Pfeils angegeben), so wird dies aufgrund des Durchmessers der Laufrolle 11 in einem Abschnitt erfolgen, der unter der Drehachse 111 liegt.

Die Laufrolle 11 wird bei Auftreffen auf die Schwelle S nach hinten und oben bewegt. Die Feder 21 bzw. der federnde Halteabschnitt 13 ermöglichen dies. Zur erforderlichen Bewegbarkeit der Laufrolle 11 nach hinten und oben können weitere Komponenten wie z. B. das Scharnier 25 aus Fig. 5c beitragen.

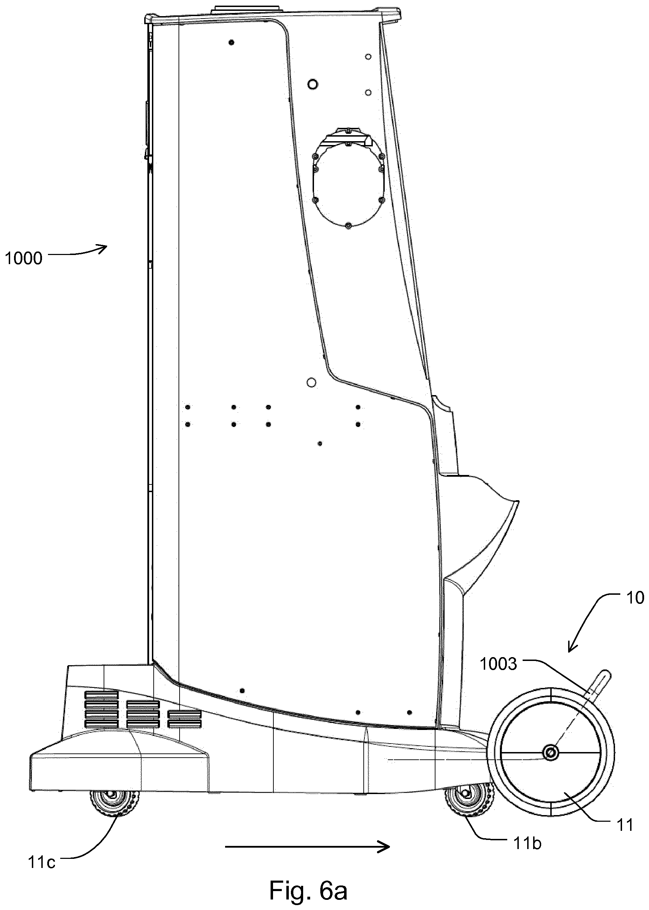

**Fig. 6a** zeigt eine weitere Ausführungsform des erfindungsgemäßen Fahrwerks 10 als Teil einer erfindungsgemäßen medizinischen Behandlungsvorrichtung 1000 in einer Darstellung von der Seite.

Vom Fahrwerk 10 ist die Fahrrolle 11 zu erkennen, die in der exemplarischen Ausgestaltung der Fig. 6a keinen Kontakt mit dem Untergrund hat, sondern in einigem Abstand, etwa ein paar Millimeter (hier: 3 mm) oder Zentimeter, über dem Untergrund vorgesehen ist, und erst zur "Fahr"rolle (also zu einer Rolle, auf welcher die Behandlungsvorrichtung fährt oder rollt, oder zu einer Rolle, die Kontakt mit den Untergrund hat) wird, wenn es gilt, eine Schwelle S zu überwinden.

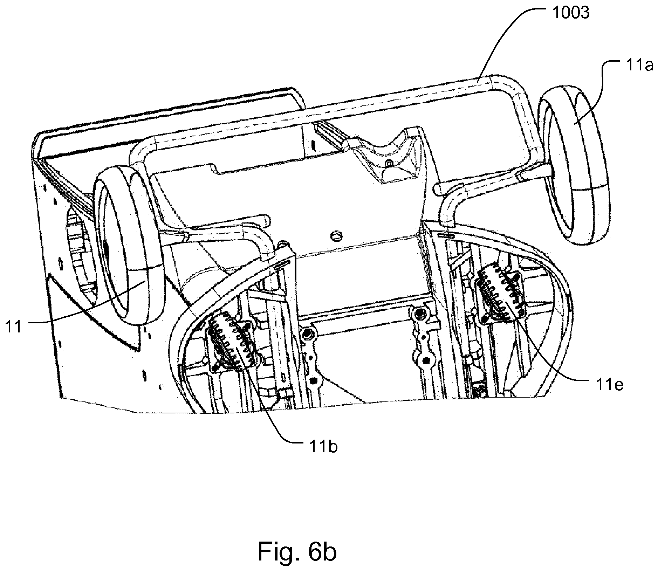

Neben der in Fig. 6a gezeigten Fahrrolle 11 kann es optional eine in der Ansicht der Fig. 6a von dieser verdeckte Fahrrolle 11a (siehe Fig. 6b) geben, auf die das hier zur Fahrrolle 11 Gesagte ebenfalls zutreffen kann.

Weiter sind Fig. 6a Fahrrollen 11b und 11c zu entnehmen, die neben wiederum nicht gezeigten weiteren, optionalen Fahrrollen desselben Typs vorgesehen sind.

Die Fahrrolle 11 ist in Fahrtrichtung (entspricht der Pfeilrichtung in Fig. 6a) der vergleichsweise deutlich kleineren Fahrrolle 11b vorlagert.

Wird die Behandlungsvorrichtung 1000 gegen eine Schwelle S gefahren, so kommt diese zunächst mit der vorgelagerten Fahrrolle 11 in Kontakt und wird von dieser, die die Schwelle S überrollen kann, in ihrem vorderen Bereich, in welchem auch die Fahrrolle 11b angeordnet ist, auf das Niveau der Schwelle S gehoben. Aufgrund des vergleichsweise geringeren Durchmessers der Fahrrolle 11b wird diese dabei ebenfalls auf die Schwelle S gehoben. Alternativ wird die Fahrrolle 11b dabei doch wenigstens so weit angehoben, dass der Höhenunterschied, den die Fahrrolle 11b beim Überwinden der Schwelle S noch selber rollend überwinden muss, ausreichend gering ist. Optimalerweise ist die verbleibende Höhe, die die Fahrrolle 11b rollend überwinden muss, geringer als ihr Radius. Eine geschickte Anordnung der Fahrrolle 11 zur Fahrrolle 11b (durch Wahl des Abstands zwischen beiden) und eine geeignete Wahl der Radien beider Fahrrollen 11, 11b kann dies ermöglichen.

Wie in Fig. 6a, besser aber noch in Fig. 6b, zu erkennen ist, weist die Behandlungsvorrichtung 1000 optional eine Kanisterhalterung 1003 auf. Sie dient, falls vorhanden, dem Aufnehmen oder Abstellen wenigstens eines Kanisters mit einer Flüssigkeit, die zur oder bei der Behandlung des Patienten benötigt wird oder anfällt.

**Fig. 6b** zeigt die erfindungsgemäße medizinische Behandlungsvorrichtung 1000 der Fig. 6a in einer Ansicht von unten. Die Vorderseite der Behandlungsvorrichtung 1000 zeigt nach oben. Zu erkennen ist, dass die Fahrrollen 11 und 11a ihrerseits an der Kanisterhalterung 1003 befestigt sind, vorzugsweise so, dass sie wenigstens einen in den Figuren nicht gezeigten Kanister zu seinen beiden Seiten begrenzen und somit, insbesondere beim Überwinden der Schwelle S, gegen ein seitliches Herausfallen bewahren können.

In einer weiteren Ausgestaltung der in den Fig. 6a und 6b gezeigten Ausführungsform sind die Fahrrollen 11 und/oder 11a mit wenigstens einer Feder versehen, die ein Wegkippen nach oben und hinten, etwa wie zu den Fig. 5a bis 5b beschrieben, erlauben.

Die Fahrrollen 11b bis 11e, von denen nur die Rollen 11b und 11e gezeigt sind, können, wie in Fig. 6b gezeigt, optional als Lenkrollen ausgestaltet sein.

Die Fahrrollen 11 und 11a können, wie in Fig. 6b gezeigt, optional als feststehende Rollen, also nicht als Lenkrollen ausgestaltet sein.

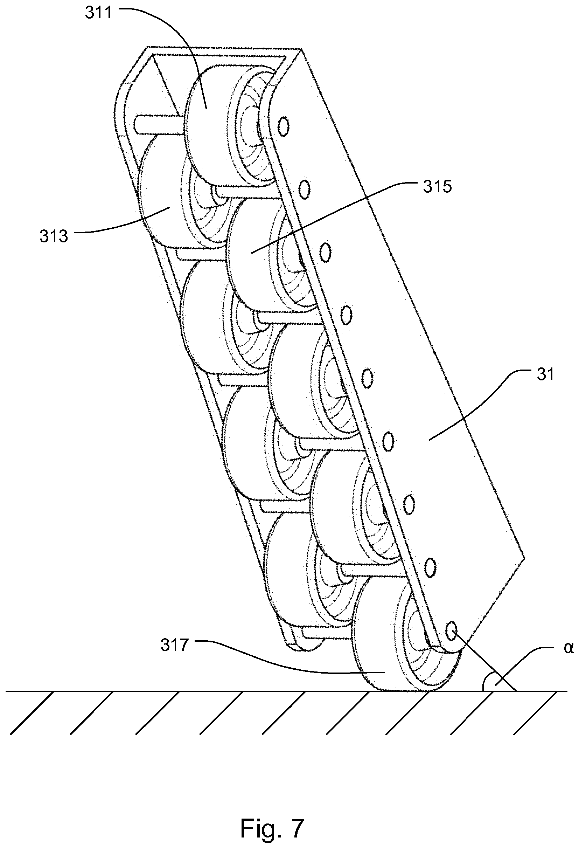

**Fig. 7** zeigt eine weitere Ausführungsform des erfindungsgemäßen Fahrwerks 10 für eine in Fig. 7 nicht gezeigte erfindungsgemäße medizinische Behandlungsvorrichtung.

Fig. 7 zeigt eine Kufe 31, welche an ihrer Unterseite eine Reihe von Rädern aufweist, von denen einige mit den Bezugszeichen 311, 313, 315 bzw. 317 bezeichnet sind.

Die Kufe 31 wird derart vor den Fahrrollen der medizinischen Behandlungsvorrichtung befestigt, dass das hinterste Rad 317 der Kufe 31 vor der vorderen Fahrrolle (wie etwa jene Fahrrolle 11b der Fig. 6a oder 6b) und/oder höher als die vordere Fahrrolle positioniert ist.

Manche oder alle der Räder der Kufe 31 sind auf einer Geraden angeordnet, die unter dem Winkel α zum Untergrund steht.

Wie Fig. 7 zeigt, können die Räder versetzt zueinander angeordnet werden, um Platz zu sparen.

### Bezugszeichenliste

- 1000: medizinische Behandlungsvorrichtung, z. B. Dialysevorrichtung
- 1001: Gehäuseabschnitt
- 1003: Kanisterhalterung

- 10: Fahrwerk
- 11: Laufrolle
- 11a: weitere Laufrolle
- 11b: Fahrrolle
- 11c: Fahrrolle
- 11e: Fahrrolle

- 13: Haltevorrichtung
- 131: Schraube
- 133: vorderer Anschlag
- 135: hinterer Anschlag
- 137: Verbindungsabschnitt

- 15: zweite Lauffläche
- 17: Laufsteg oder Laufband
- 19: Balken
- 20: biegsames Element
- 21: erste Feder
- 23: zweite Feder
- 25: Scharnier

- 31: Kufe
- 311: Rad
- 313: Rad
- 315: Rad
- 317: Rad
- 111: erste Drehachse
- 113: erste Lauffläche

- 171: vorderes Ende
- 173: hinteres Ende

- L: Längserstreckung
- S: Schwelle

- α: Winkel

## Patentansprüche

1. Fahrwerk (10) für eine medizinische Behandlungsvorrichtung (1000), wobei das Fahrwerk (10) wenigstens aufweist:
- eine Laufrolle (11) mit einer ersten Drehachse (111) und mit einer ersten Lauffläche (113), welche einen ersten Radius aufweist;
- eine Haltevorrichtung (13), in oder an welcher die Drehachse (111) gehalten wird,
- eine zweite Lauffläche (15), angeordnet, um um eine zweite Drehachse drehbar zu sein, wobei die zweite Drehachse mit der ersten Drehachse (111) identisch ist, wobei die zweite Lauffläche (15) einen zweiten Radius aufweist, wobei der zweite Radius kleiner als der erste Radius ist; und
- einen Laufsteg (17), welcher in Kontakt zur zweiten Lauffläche (15) steht und relativ zu dieser bewegbar ist, **dadurch gekennzeichnet, dass** der Laufsteg (17) des Fahrwerks (10) ein vorderes Ende (171) und ein hinteres Ende (173) aufweist, wobei die beiden Enden (171, 173) jeweils mittelbar oder unmittelbar mit einem Abschnitt der Haltevorrichtung (13) verbunden oder zu ihrem Verbinden mit dem Gehäuseabschnitt (1001) vorbereitet sind.

2. Fahrwerk nach Anspruch 1, wobei der Laufsteg (17) des Fahrwerks (10) derart angeordnet ist, dass er, während die zweite Lauffläche beim Überwinden einer Schwelle (S) den Laufsteg (17) entlang fährt, unter einem konstanten Winkel (α) zum Gehäuseabschnitt (1001) oder zum Untergrund steht.

3. Fahrwerk (10) nach wenigstens einem der Ansprüche 1 bis 2, wobei der Laufsteg (17) drehbar mit einem anderen Abschnitt des Fahrwerks (10) verbunden oder zum Verbinden mit dem Gehäuseabschnitt (1001) vorbereitet ist.

4. Fahrwerk (10) nach wenigstens einem der Ansprüche 1 bis 3, wobei der Laufsteg (17), insbesondere mit seinem hinteren Ende (173), mittels einer ersten Feder (21) mit einem weiteren Abschnitt des Fahrwerks (10) verbunden oder zu seinem Verbinden mit dem Gehäuseabschnitt (1001) vorbereitet ist.

5. Fahrwerk (10) nach wenigstens einem der Ansprüche 1 bis 4, wobei der Laufsteg (17) mit seinem vorderen Ende (171) mittels einer zweiten Feder (23) mit einem weiteren Abschnitt des Fahrwerks (10) verbunden oder zu seinem Verbinden mit dem Gehäuseabschnitt (1001) vorbereitet ist.

6. Fahrwerk (10) nach wenigstens einem der Ansprüche 1 bis 5, wobei die zweite Lauffläche (15) Teil einer zweiten Rolle ist, welche mit der Laufrolle (11) nicht form und/oder nicht kraftschlüssig verbunden ist.

7. Fahrwerk (10) nach wenigstens einem der Ansprüche 1 bis 6, wobei der Laufsteg (17) angeordnet ist, um zwischen einer ersten Position bezogen auf die Laufrolle (11) und einer zweiten Position bezogen auf die Laufrolle (11) bewegt zu werden, aufweisend einen Rückstellmechanismus um den Laufsteg (17) aus der zweiten Position in die erste Position zurückzuführen.

8. Medizinische Behandlungsvorrichtung (1000), aufweisend wenigstens einen Gehäuseabschnitt (1001) und wenigstens ein Fahrwerk (10) nach Anspruch 1, wobei die Haltevorrichtung (13) ihrerseits mittelbar oder unmittelbar mit dem Gehäuseabschnitt (1001) verbunden ist.

9. Medizinische Behandlungsvorrichtung (1000) nach Anspruch 8, wobei der Laufsteg (17) des Fahrwerks (10) derart angeordnet ist, dass er, während die zweite Lauffläche (15) beim Überwinden einer Schwelle (S) den Laufsteg (17) entlangfährt oder entlangrollt, unter einem konstanten Winkel (α) zum Gehäuseabschnitt (1001) oder zum Untergrund steht.

10. Medizinische Behandlungsvorrichtung (1000) nach einem der Ansprüche 8 bis 9, wobei der Laufsteg (17), insbesondere mit seinem vorderen Ende (171) mittelbar oder unmittelbar drehbar mit einem anderen Abschnitt des Fahrwerks (10) oder mit dem Gehäuseabschnitt (1001) verbunden ist.

11. Medizinische Behandlungsvorrichtung (1000) nach einem der Ansprüche 8 bis 10 wobei der Laufsteg (17), insbesondere mit seinem hinteren Ende (173), mittels einer ersten Feder (21) mittelbar oder unmittelbar mit einem weiteren Abschnitt des Fahrwerks (10) oder mit dem Gehäuseabschnitt (1001) verbunden ist.

12. Medizinische Behandlungsvorrichtung (1000) nach einem der Ansprüche 8 bis 11, wobei der Laufsteg (17) mit seinem vorderen Ende (171) mittels einer zweiten Feder (23) mittelbar oder unmittelbar mit einem weiteren Fresenius Medical Care Deutschland GmbH Abschnitt des Fahrwerks (10) oder mit dem Gehäuseabschnitt (1001) verbunden ist.

13. Medizinische Behandlungsvorrichtung (1000) nach einem der Ansprüche 8 bis 12, wobei die zweite Lauffläche (15) Teil einer zweiten Rolle ist, welche mit der Laufrolle (11) nicht form- und/oder nicht kraftschlüssig verbunden ist.

14. Medizinische Behandlungsvorrichtung (1000) nach einem der Ansprüche 8 bis 13 wobei der Laufsteg (17) angeordnet ist, um zwischen einer ersten Position bezogen auf die Laufrolle (11) und einer zweiten Position bezogen auf die Laufrolle (11) bewegt zu werden, aufweisend einen Rückstellmechanismus, um den Laufsteg (17) aus der zweiten Position in die erste Position zurückzuführen.

15. Medizinische Behandlungsvorrichtung (1000) nach einem der Ansprüche 8 bis 14 ausgestaltet als Dialysevorrichtung, Peritonealdialysevorrichtung, Hämodialysevorrichtung, Hämofiltrationsvorrichtung oder Hämodiafiltrationsvorrichtung, insbesondere als eine Vorrichtung für die chronische Nierenersatztherapie oder für die kontinuierliche Nierenersatztherapie (CRRT = continuous renal replacement therapy).

## Claims

1. An undercarriage (10) for a medical treatment apparatus (1000), the undercarriage (10) comprising at least:
- a caster (11) having a first rotational axis (111) and a first tread surface (113) comprising a first radius;
- a support (13) in or on which the rotational axis (111) is held;
- a second tread surface (15) arranged to be rotatable about a second rotational axis, the second rotational axis being identical to the first rotational axis (111), the second tread surface (15) comprising a second radius, the second radius being smaller than the first radius; and
- a track (17) being in contact with the second tread surface (15) and movable relative thereto, **characterized in that** the track (17) of the undercarriage (10) comprises a front end (171) and a rear end (173), both ends (171, 173) being, each, directly or indirectly connected to a section of the support (13) or prepared to be connected to the housing section (1001).

2. The undercarriage according to claim 1, wherein the track (17) of the undercarriage (10) is arranged such that, it is at a constant angle (α) to the housing section (1001) or to the ground, as the second tread surface runs along the track (17) when overcoming a threshold (S).

3. The undercarriage (10) according to at least anyone of claims 1 to 2, wherein the track (17) is rotatably connected to another section of the undercarriage (10) or prepared for connection to the housing section (1001).

4. The undercarriage (10) according to at least anyone of claims 1 to 3, wherein the track (17) is connected, in particular by its rear end (173), by means of a first spring (21) to a further section of the undercarriage (10), or is prepared for its connection to the housing section (1001).

5. The undercarriage (10) according to at least anyone of claims 1 to 4, wherein the track (17) is connected, by its front end (171), by means of a second spring (23), to a further section of the undercarriage (10) or is prepared for its connection to the housing section (1001).

6. The undercarriage (10) according to at least anyone of claims 1 to 5, wherein the second tread surface (15) is part of a second roller which is not form-locking and/or not friction-locking connected to the caster (11).

7. The undercarriage (10) according to at least anyone of claims 1 to 6, wherein the track (17) is arranged to be moved between a first position relative to the caster (11) and a second position relative to the caster (11), comprising a reset mechanism to return the track (17) from the second position back to the first position.

8. A medical treatment apparatus (1000), comprising at least one housing section (1001) and at least one undercarriage (10) according to claim 1, wherein the support (13) is in turn directly or indirectly connected to the housing section (1001).

9. The medical treatment apparatus (1000) according to claim 8, wherein the track (17) of the undercarriage (10) is arranged such that, it is at a constant angle (α) to the housing section (1001) or to the ground, as the second tread surface (15) runs or rolls along the track (17) when overcoming a threshold (S).

10. The medical treatment apparatus (1000) according to anyone of claims 8 to 9, wherein the track (17) is directly or indirectly rotatably connected, in particular by its front end (171), to another section of the undercarriage (10) or to the housing section (1001).

11. The medical treatment apparatus (1000) according to anyone of claims 8 to 10, wherein the track (17) is connected, in particular by its rear end (173), by means of a first spring (21), to a further section of the undercarriage (10) or to the housing section (1001).

12. The medical treatment apparatus (1000) according to anyone of claims 8 to 11, wherein the track (17) is directly or indirectly connected by its front end (171), by means of a second spring (23), to a further section of the undercarriage (10) or to the housing section (1001).

13. The medical treatment apparatus (1000) according to anyone of claims 8 to 12, wherein the second tread surface (15) is part of a second roller which is not form-locking and/or not friction-locking connected to the caster (11).

14. The medical treatment apparatus (1000) according to anyone of claims 8 to 13, wherein the track (17) is arranged to be moved between a first position relative to the caster (11) and a second position relative to the caster (11), comprising a reset mechanism to return the track (17) from the second position back to the first position.

15. The medical treatment apparatus (1000) according to anyone of claims 8 to 14, designed as a dialysis apparatus, peritoneal dialysis apparatus, hemodialysis apparatus, hemofiltration apparatus or hemodiafiltration apparatus, in particular as an apparatus for chronic renal replacement therapy or for continuous renal replacement therapy (= CRRT) .

## Revendications

1. Un châssis (10) pour un appareil de traitement médical (1000), le châssis (10) comprenant au moins:
- une roulette (11) avec un premier axe de rotation (111) ainsi qu'une première surface de roulement (113) présentant un premier rayon;
- un support (13), dans ou sur lequel est maintenu l'axe de rotation (111);
- une seconde surface de roulement (15) agencée de manière à être pivotable autour d'un second axe de rotation, le second axe de rotation étant identique au premier axe de rotation (111), la seconde surface de roulement (15) présentant un second rayon, le second rayon étant plus petit que le premier rayon; et
- une traverse (17) en contact avec la seconde surface de roulement (15) et mobile par rapport à celle-ci, **caractérisé en ce que** la traverse (17) du châssis (10) présente une extrémité avant (171) ainsi qu'une extrémité arrière (173), les deux extrémités (171, 173) étant, chacune, reliées directement ou indirectement à une section du support (13) ou étant préparées pour être reliées à la partie du boîtier (1001).

2. Le châssis selon la première revendication, où la traverse (17) du châssis (10) est agencée de telle sorte qu'elle forme un angle constant (α) avec la partie du boîtier (1001) ou avec le sol lorsque que la seconde surface de roulement se déplace le long de la traverse (17) au franchissement d'un seuil (S).

3. Le châssis (10) selon au moins l'une quelconque des revendications 1 à 2, où la traverse (17) est reliée de manière pivotante à une autre section du châssis (10) ou est préparée pour être reliée à la partie du boîtier (1001).

4. Le châssis (10) selon au moins l'une quelconque des revendications 1 à 3, où la traverse (17) est reliée, notamment par son extrémité arrière (173), au moyen d'un premier ressort (21) à une autre section du châssis (10), ou est préparée pour être reliée à la partie de boîtier (1001).

5. Le châssis (10) selon au moins l'une quelconque des revendications 1 à 4, où la traverse (17) est reliée par son extrémité avant (171), au moyen d'un second ressort (23), à une autre section du châssis (10), ou est préparée pour être reliée à la partie du boîtier (1001).

6. Le châssis (10) selon au moins l'une quelconque des revendications 1 à 5, où la seconde surface de roulement (15) fait partie d'une seconde roulette qui n'est ni reliée en complémentarité de forme et/ou ni en complémentarité de force à la roulette (11).

7. Le châssis (10) selon au moins l'une quelconque des revendications 1 à 6, où la traverse (17) est agencée pour être déplacée entre une première position par rapport à la roulette (11) et une seconde position par rapport à la roulette (11), comprenant un mécanisme de rappel pour ramener la traverse (17) de la seconde position à la première position.

8. Un appareil de traitement médical (1000), comprenant au moins une partie du boîtier (1001) et au moins un châssis (10) selon la première revendication, où le support (13) est à son tour relié directement ou indirectement à la partie du boîtier (1001).

9. L'appareil de traitement médical (1000) selon la revendication 8, où la traverse (17) du châssis (10) est agencée de telle sorte qu'elle forme un angle constant (α) avec la partie du boîtier (1001) ou avec le sol lorsque la seconde surface de roulement (15) se déplace ou roule le long de la traverse (17) au franchissement d'un seuil (S).

10. L'appareil de traitement médical (1000) selon l'une quelconque des revendications 8 à 9, où la traverse (17) est reliée, notamment par son extrémité avant (171), directement ou indirectement de façon pivotante, à une autre section du châssis (10) ou à une partie du boîtier (1001).

11. L'appareil de traitement médical (1000) selon l'une quelconque des revendications 8 à 10, où la traverse (17) est reliée directement ou indirectement, notamment par son extrémité arrière (173), au moyen d'un premier ressort (21), à une autre section du châssis (10) ou à la partie du boîtier (1001).

12. L'appareil de traitement médical (1000) selon l'un quelconque des revendications 8 à 11, où la traverse (17) est reliée directement ou indirectement par son extrémité avant (171), au moyen d'un second ressort (23), à une autre section du châssis (10) ou à la partie du boîtier (1001).

13. L'appareil de traitement médical (1000) selon l'une quelconque des revendications 8 à 12, où la seconde surface de roulement (15) fait partie d'une seconde roulette qui n'est ni reliée en complémentarité de forme et/ou ni en complémentarité de force à la roulette (11).

14. L'appareil de traitement médical (1000) selon l'une quelconque des revendications 8 à 13, où la traverse (17) est agencée pour être déplacée entre une première position par rapport à la roulette (11) et une seconde position par rapport à la roulette (11), comprenant un mécanisme de rappel pour ramener la traverse (17) de la seconde position à la première position.

15. L'appareil de traitement médical (1000) selon l'une quelconque des revendications 8 à 14, conçu comme appareil de dialyse, appareil de dialyse péritonéale, appareil d'hémodialyse, appareil d'hémofiltration ou appareil d'hémodiafiltration, notamment comme appareil pour la thérapie de remplacement rénal chronique ou pour la thérapie de remplacement rénal continue (CRRT = continuous renal replacement therapy).
